# EUROPEAN PATENT APPLICATION

(11) **EP 4 227 870 A1**
(43) Date of publication of application: **16.08.2023**
(21) Application number: 23156125.9
(22) Date of filing: 10.02.2023
(51) Int. Cl.: G06Q 10/063, G06Q 50/06

(54) **SYSTEM AND METHOD FOR NON-LINEAR SIGNAL EXTRACTION AND STRUCTURAL-DRIFT DETECTION**

(30) Priority: 11.02.2022 IN 202211007319
(71) Applicant: Carrier Corporation, Palm Beach Gardens, FL 33418 (US)
(72) Inventor: BASKARAN, Deepak, 560035 Bangalore (IN); BILLE, Rajesh, 560035 Bangalore (IN)
(74) Representative: Dehns

(57) **Abstract**

Various embodiments of the present invention describes optimizing energy performance evaluation. The invention describes a system with an energy consumption data unit configured to determine an energy consumption data associated with an entity in different cycles. A structural drift identifier unit is configured to classify the energy consumption data into multiple individual drift classes. A non-linear signal extractor unit is configured to extract a set of non-linear signals from the energy consumption data by defining cycles based on the frequency of energy consumption data and evaluating the variance in energy consumption data. The system comprises an individual drift class refinement unit configured to refine individual drift classes by eliminating first weak drifts using the set of non-linear signals resulting into refined individual drift classes. A collective drift refinement unit configured to collate and collectively refine individual drift instances of all the refined individual drift classes into refined collective drift classes by eliminating second weak drifts.

## Description

The present invention generally relates to energy performance evaluation solutions. More particularly, the invention relates to a system and a method for analyzing energy consumption data for evaluating actual performance of a plurality of units located at various hierarchies of levels.

Management of energy consumption resources and measurable energy performance need a robust mechanism. The available energy consumption units were not able to provide the necessary data that could help in analysis and management. Also, the conventional methods to evaluate energy performance did not fulfill the client needs in producing justifiable outputs. In the current scenario, excessive energy wastage not only results in heavy bills but also has severe environmental impact. Therefore, managing energy is a key consideration for clients today.

Energy consumption requirements of various sites like residential buildings, commercial places and industries vary. They are equipped with different types of energy consumption units. The units that consume energy can be categorized into one or more of lighting systems, chillers, heating ventilation and air-conditioning (HVAC) systems, elevators, automation systems, boilers, furnaces, heat exchangers, motors, fans, blowers, pumps, power backup systems etc. Units being manufactured by different manufacturers, having different models and sizes, and data/information that is derived from these units varies considerably. This can be attributed to varying operating conditions, end usage requirement, installation location, weather conditions and/or changes in hardware or software being used. Due to high variances in the data from these energy consumption units, it is difficult to evaluate energy performance of a building or a site. In other words, the impact on overall power consumption is not deterministic.

Most of the existing methods for energy performance evaluation do not provide accurate outputs. The existing methods may be able to evaluate one or more of direct measuring/descriptive statistics of the energy consumption or build a predictive/statistical model based upon analyzing the energy and non-energy data of buildings. However, such techniques do not disclose the intricate or hidden features of the energy consumption entities, thus leading to incorrect measurement of energy consumption and inefficient energy strategies.

In view of the afore-mentioned problems in the existing solutions, there is a need of a robust system and a method for measuring energy performance. Also, there is requirement of a system that can efficiently measure the effectiveness of policy change/ efficiency strategy implemented at any/all of the sites. There is a requirement to recursively identify changes in the behavior of consumption, yielding incremental improvement in drift detection and reveal hidden details in the energy consumption. In order to solve the problems in the existing solutions, a system and a method are disclosed.

The following presents a simplified summary of the invention in order to provide a basic understanding of some aspects of the invention. This summary is not an extensive overview of the present invention. It is not intended to identify the key/critical elements of the invention or to delineate the scope of the invention. Its sole purpose is to present some concept of the invention in a simplified form as a prelude to a more detailed description of the invention presented later.

According to a first aspect of the invention, there is provided a system for optimizing energy performance evaluation as recited in claim 1. The system comprises an energy consumption data unit configured to determine an energy consumption data associated with an entity in different cycles and a data pre-processing unit to pre-process the energy consumption data. The system also comprises a structural drift identifier unit configured to classify the energy consumption data into multiple individual drift classes. Also, individual drift classes are defined on the basis of a set of parameters. The system further comprises a non-linear signal extractor unit configured to extract a set of non-linear signals from the energy consumption data by defining cycles based on the frequency of energy consumption data and evaluating the variance in energy consumption data. The system also comprises an individual drift class refinement unit configured to refine individual drift classes by eliminating first weak drifts using the set of non-linear signals resulting into refined individual drift classes. The system further comprises a collective drift refinement unit configured to collate and collectively refine the individual drift instances of all the classes into refined collective drift classes by eliminating second weak drifts. The system also comprises a performance analyzer unit configured to analyze insights derived based on refined collective drift classes.

Optionally, the cycles of the energy consumption data are based on one or more of months, days, hours.

Optionally, the energy consumption data is captured at different hierarchies of levels including one or more of asset, service, site, enterprise.

Optionally, the different hierarchies of levels are associated with energy consumption attributes that includes one or more of outside air temperature, cooling degree day (CDD), heating degree day (HDD), building management system (BMS), assets details, site age, climate zone, site area, site modification details.

Optionally, the set of parameters are user defined inputs including prolongation, direction and drift significance threshold.

Optionally, the system comprises a data pre-processing unit configured to pre-process the energy consumption data. The data pre-processing unit is configured to identify missing data by pre-processing the energy consumption data. The data pre-processing unit is also configured to run data aggregations based on user needs and analyse the attributes for their attribute importance, significance at individual or combinational level by capturing interactions between attributes on energy consumption data.

Optionally, the structural drift identifier unit further comprises a drift instance identification unit configured to identify drift instance for each individual drift class using a consumption unit and a noise unit.

Optionally, the energy consumption data unit is configured to extract noise from the energy consumption data and compute revised consumption data by eliminating drift impact identified in the iterations performed by the noise unit from the energy consumption data. The energy consumption unit is further configured to iteratively repeat the operation of energy consumption data unit until no further drifts are identified by noise unit.

Optionally, the noise unit is configured to iteratively compute drift impact through statistical testing of the extracted noise at each time instance where test statistics is above a drift significance threshold and generate revised noise by eliminating the drift impact from the noise for time instances where noise is above the drift significance threshold. The noise unit is further configured to collate data corresponding to drift instances and respective drift impact identified for each iteration performed by the noise unit and eliminate adjacent instances of long/short drift classes and duplicate drift instances of drift classes by giving preference to instances with higher drift impact.

Optionally, the structural drift identifier unit further comprises a drift class splitter configured to segregate the energy consumption data into the individual drift classes. The individual drift class is one or more of long-term increase (LTI), long term decrease (LTD), short term increase (STI), short term decrease (STD), onetime abrupt increase (OTAI), onetime abrupt decrease (OTAD).

Optionally, the structural drift identifier unit further comprises a weak drift adjacent instance eliminator configured to identify and eliminate the adjacent drift instances having low impact drifts from each individual drift class based on the respective drift impact.

Optionally, the non-linear signal extractor unit is further configured to model the variations in the energy consumption data to capture signals which are non-linear and devoid of seasonal variations. The users may have an option to select or provide the user inputs based on various inputs under pre-adjustment configurator and an external predictors block to enable the non-linear signal extractor to capture all the variations in the energy consumption data.

Optionally, the individual drift class refinement unit is configured to eliminate first weak drifts in the individual drift classes through the set of non-linear signals by computing non-linear signal (NLS) cyclic variation, non-linear adjacency variation, prolongation, validity of drift instance and percentage impact due to drift.

Optionally, the individual drift class refinement unit is configured to determine the NLS cyclic-variation by calculating a percentage signal difference between a previous cycle and a current cycle and checking using a variation criteria unit if the NLS cyclic variation satisfies a predefined user criterion.

Optionally, the individual drift class refinement unit is further configured to determine the NLS adjacency variation by calculating a percentage signal difference between adjacent instances and checking by using a variation criteria unit if the NLS adjacency variation satisfies a predefined user criterion.

Optionally, the individual drift class refinement unit is further configured to determine prolongation by calculating number of instances for which NLS cyclic-variations satisfy the NLS variation criteria for one cycle and checking using a drift prolongation criteria unit if the prolongation satisfies a predefined user criterion.

Optionally, the percentage impact due to drift is calculated differently based on the drift classes and the cycle in which drift is identified.

Optionally, the collective drift refinement unit further comprises a weak drift eliminator unit configured to receive collated drift instances and to eliminate second weak drifts based on adjacency and replication criteria to generate refined collective drift classes.

Optionally, the performance analyzer further comprises a drift insights unit configured to analyze drift instances and NLS variation at various levels of hierarchies.

Optionally, the performance analyzer also comprises a combinational and operational insights unit configured to measure effectiveness of operational and policy changes based on available operational and policy information.

Optionally, the performance analyzer comprises a homogenous entity formation unit configured to disclose homogenous entities formed using available inputs including one or more of unit attributes, operational attributes, policy attributes, drift instances, NLS variations, prolongations and percentage impact due to drift.

Optionally, the performance analyzer further comprises a homogenous entity interpretation unit configured to define one or more characteristics of each homogenous entity and to identify key attributes causing drift.

Optionally, the performance analyzer is further configured to measure the effectiveness of operational and policy changes that the entities have undergone in comparison within or across the entities and to display a scorecard indicating the performance of each entity.

According to a second aspect of the invention, there is provided a method for optimizing energy performance evaluation as recited in claim 14. The method comprises steps of determining an energy consumption data associated with an entity in different cycles using an energy consumption data unit. The method also comprises steps of classifying the energy consumption data into multiple individual drift classes using a structural drift identifier unit. Also, individual drift classes are defined on the basis of a set of parameters. The method further comprises steps of extracting a set of non-linear signals from the energy consumption data using a non-linear signal extractor unit, by identifying cycles based on the frequency of energy consumption data and evaluating the variance in the energy consumption data. The method also comprises steps of refining the individual drift classes using an individual drift class refinement unit, by eliminating first weak drifts and the variance from the consumption data to generate set of non-linear signals resulting into refined individual drift classes. The method also comprises steps of collating and collectively refine the refined individual drift classes of all the individual drift classes into refined collective drift classes by eliminating second weak drifts using a collective drift refinement unit. The method further comprises steps of analyzing insights derived based on refined collective drift classes using a performance analyzer.

Optionally, the set of parameters are user defined inputs including prolongation, direction and drift significance threshold.

Optionally, the structural drift identifier unit further comprises drift instance identification unit configured to identify drift instances for each individual drift class using the energy consumption data unit and a noise unit.

Optionally, the method comprises extracting noise from the energy consumption data and computing revised energy consumption data by eliminating drift impact identified in iterations performed by the noise unit from the energy consumption data. The energy consumption data unit is also configured to iteratively repeating the operation of the energy consumption data unit until no further drifts are identified by the noise unit.

Optionally, the method comprises iteratively computing drift impact through statistical testing of the extracted noise at each time instance where test statistics is above a drift significance threshold and generating revised noise by eliminating the drift impact from the noise for time instances where noise is above the drift significance threshold. The method comprises collating data corresponding to drift instances and respective drift impact identified for each iteration performed by the noise unit and eliminating adjacent instances of long/short drift classes and duplicate drift instances of drift classes by giving preference to instances with higher drift impact.

Optionally, the structural drift identifier unit further comprises segregating the energy consumption data into the individual drift classes using a drift class splitter. The individual drift class is one or more of long-term increase (LTI), long term decrease (LTD), short term increase (STI), short term decrease (STD), onetime abrupt increase (OTAI), onetime abrupt decrease (OTAD).

Optionally, the structural drift identifier unit further comprises identifying and eliminating the adjacent drift instances having low impact drifts from each class based on the respective drift impact using a weak drift adjacent instance eliminator.

Optionally, the non-linear signal extractor unit is further configured to model the variations in consumption data to capture Non-Linear signals devoid of seasonal variations based on the inputs provided under pre-adjustment configurator and external predictors of user input unit.

The method of the second aspect of the invention may comprise using and/or providing the system and/or any features thereof as recited herein with reference to the first aspect of the invention. The system of the first aspect of the invention may be configured to perform the method of the second aspect of the invention and/or any features thereof.

According to a third aspect of the invention, there is provided a computer readable medium as recited in claim 15. The computer reasable medium comprises one or more processors and a memory coupled to the one or more processors and the memory storing instructions executed by the one or more processors. The one or more processors are configured to determine an energy consumption data associated with an entity in different cycles and pre-process the energy consumption data. The one or more processors are also configured to classify the energy consumption data into multiple individual drift classes. Also, individual drift classes are defined on basis of a set of parameters. The one or more processors are also configured to extract a set of non-linear signals from the energy consumption data by identifying cycles based on the frequency of energy consumption data and evaluating the variance in energy consumption data. The one or more processors are further configured to refine the individual drift classes by eliminating first weak drifts using the set of non-linear signals resulting into refined individual drift classes. The one or more processors are also configured to collate and collectively refine the refined individual drift instances of all the individual drift classes into refined collective drift classes by eliminating second weak drifts. The one or more processors are also configured to analyze insights derived based on refined collective drift classes.

The computer readable medium of the third aspect of the invention may be configured for use with the system of the first aspect of the invention, and/or may provide any features thereof. The system of the first aspect of the invention may comprise the computer readable medium of the third aspect of the invention. The computer readable medium may be configured to perform the method of the second aspect of the invention and/or any features thereof. The method of the second aspect of the invention may comprise using and/or providing the computer readable of the third aspect of the invention.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

Other aspects, advantages, and salient features of the invention will become apparent to those skilled in the art from the following detailed description, which taken in conjunction with the annexed drawings, discloses exemplary embodiments of the invention.

Some of the objects of the invention have been set forth above. These and other objects, features, aspects and advantages of the present invention will become better understood with regard to the following description, appended claims and accompanying drawings where:
Figure 1 depicts an exemplary system architecture according to an exemplary embodiment of the invention.
Figure 2 depicts a block diagram of different components of an exemplary system or device according to an exemplary embodiment of the invention.
Figure 3 depicts an exemplary detailed structural drift identifier unit according to an exemplary embodiment of the invention
Figure 4 depicts an exemplary detailed non-linear signal extractor unit according to an exemplary embodiment of the invention
Figure 5 depicts an exemplary detailed individual drift class refinement unit according to an exemplary embodiment of the invention
Figure 6 depicts an exemplary detailed collective drift refinement unit according to an exemplary embodiment of the invention
Figure 7 depicts an exemplary detailed performance analyzer unit according to an exemplary embodiment of the invention
Figure 8 depicts an exemplary flowchart illustrating a method to perform the invention according to an exemplary embodiment of the invention.

Corresponding reference numerals indicate corresponding parts throughout the drawings.

The following detailed description should be read with reference to the drawings in which similar elements in different drawings are numbered the same. The drawings, which are not necessarily to scale, depict illustrative embodiments and are not intended to limit the scope of the invention. Although examples of construction and dimensions of various elements are illustrated for the various elements, those skilled in the art will recognize that many of the examples provided have suitable alternatives that may be utilized.

Described herein is the technology with a system and a method for optimizing energy performance evaluation. The system comprises an energy consumption data unit configured to determine an energy consumption data associated with an entity in different cycles. The data pre-processing unit is configured to pre-process the energy consumption data. The system also comprises a structural drift identifier unit configured to classify the energy consumption data into multiple individual drift classes. Also, individual drift classes are defined on the basis of a set of parameters. The system further comprises a non-linear signal extractor unit configured to extract a set of non-linear signals from the energy consumption data by identifying cycles based on the frequency of energy consumption data and evaluating the variance in energy consumption data. The system also comprises an individual drift class refinement unit configured to refine individual drift classes by eliminating first weak drifts from energy consumption data using the set of non-linear signals resulting into refined individual drift classes. The system further comprises a collective drift refinement unit configured to collate and collectively refine the refined individual drift instances of all the classes into refined collective drift classes by eliminating second weak drifts. The system also comprises a performance analyzer configured to analyze insights derived based on refined collective drift classes.

The disclosed embodiments may be used to analyse data, for example energy consumption data, over a period of time to eliminate seasonality along with identification of drifts. It may produce multiple structural-drift classes based on magnitude and duration of energy consumption across entirety of the energy consumption data. The drift classes may undergo refinement process which may be user controllable to eliminate weak drifts. Insights may be derived based on similar drift classes, their longevity, along with functional or operational parameters. The insights, along with the energy consumption data, may be analyzed to arrive at instances which have undergone drifts providing additional insights on features, duration of feature impact etc. This may further enable to identify consumption optimization scope at single/multi-unit setup. At the multi-unit setup, scope for optimization may be identified through similarity process. Based on the similarity, characteristics of various entities may be derived which may be used to arrive at specific proactive areas of improvement across the entities.

As used herein, the energy consumption data may be collected from a plurality of energy consumption units like one or more of lighting systems, chillers, heating ventilation and air-conditioning (HVAC) systems, elevators, automation systems, a boiler, a furnace, a heat exchanger, a motor, a fan, a blower, a pump, power backup systems etc. at different sites. The different sites may be residential buildings, commercial places or industries etc. that may have different energy consumption requirements and thus may be installed with different types of the energy consumption units. Each of the plurality of energy consumption units may be connected with a server through network and transmit energy consumption data stream to the server using communication means which may be same or different.

As used herein, the server has processing capabilities as disclosed further in the specification. The server may be a cloud storage, a remote database, or any such storage known in the art.

As used herein, the network may refer to a wired network, a mesh network, a cellular network such as Global System for Mobile (GSM) network, a Long-Term Evolution (LTE) network, a code-division multiple access (CDMA) network, a narrow-band internet of thing (NB-IoT) technique or category M1 technique or any such network/technique that is known in the art.

Throughout the specification, reference numeral 110 depicts different sites. Each of the reference numerals 110-1 to 110-n may be considered as a separate site. Also, throughout the specification, reference numeral 114 depicts different energy consumption units. Each of the reference numerals 114-1 to 114-n may be considered as a separate unit.

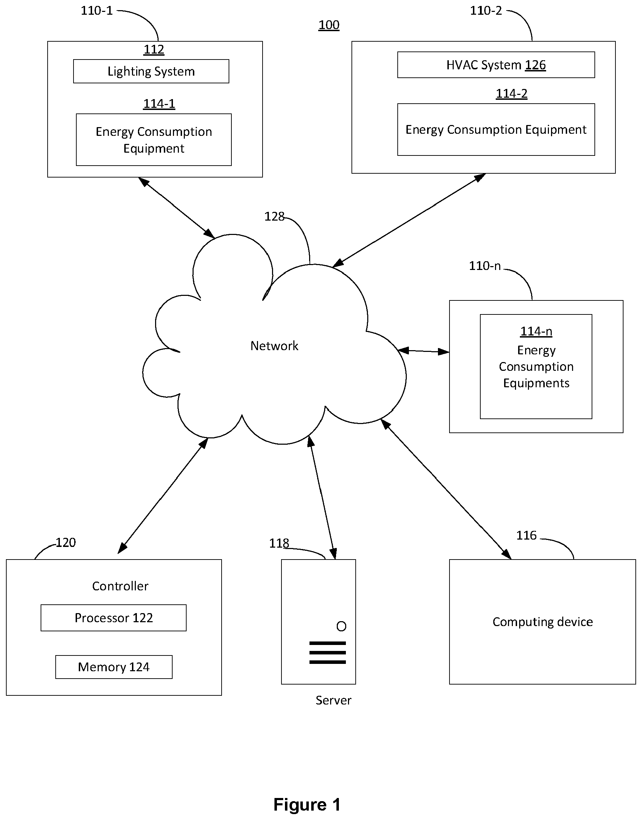

Figure 1 discloses an exemplary system architecture 100 according to an exemplary embodiment of the invention. As disclosed in Figure 1, a method of the present disclosure may be implemented on a system 100 of components (such as energy consumption units) connected over a network. In Figure 1, the site 110-1 (for example a residential building), a site 110-2 (for example a commercial building), a site 110-n (for example an industrial setup) and many more such sites are equipped with the energy consumption units 114 (may interchangeably called units) which are communicatively coupled to the network 128. The units may be one or more of lighting systems 112, chillers, heating ventilation and air-conditioning (HVAC) systems 126, elevators, automation systems, a boiler, a furnace, a heat exchanger, a motor, a fan, a blower, a pump, power backup systems etc. 114-1, 114-2... 114-n at different sites. These units 114 include respective energy measuring means and devices for measuring energy consumption over a period of time. The energy measuring means may be one or more of electricity meters, detector(s), sensor(s), controller(s), monitor(s), or any such devices. The energy measuring means may be in communication with the network 128 and may communicate with a controller 120 and a server 118. The server 118 stores the data logs received from energy measuring means through the network 128. The controller 120 may further comprise a processor 122 and a memory 124 that are communicatively coupled to each other and the processor is in communication with the network 128. In some embodiments, based on the received energy consumption data (may interchangeably be known as data) and its analysis, the controller 120 may take action to control one or more units 110. To manage energy consumption of units 114, a computing device 116 includes a user interface that allows a user to send commands, provide a user input, a threshold value etc. to the controller to affect the operation of these units (e.g. shut them off, decrease their energy consumption, provide a user input value etc.).

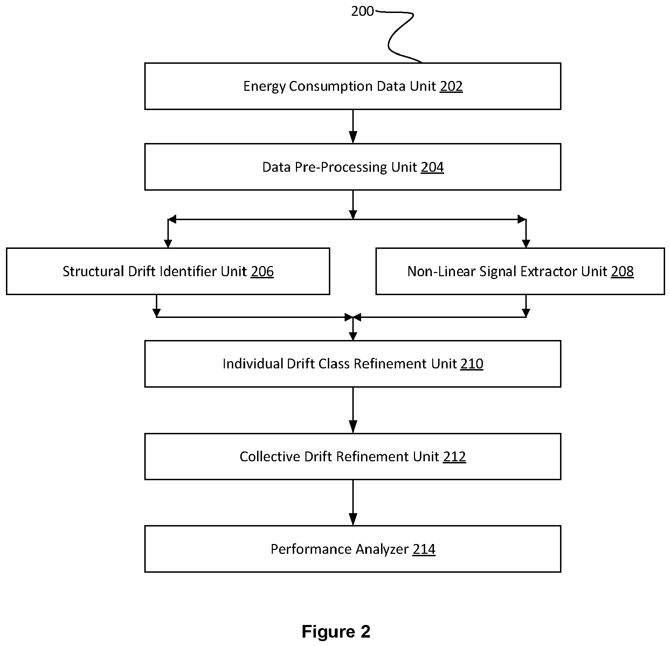

Figure 2 discloses a block diagram of an embodiment of an exemplary system 200 of the present disclosure that can be performed by the system according to an exemplary embodiment of the invention. The system 200 may comprise, but is not limited to, an energy consumption data unit 202, a data pre-processing unit 204, a structural drift identifier unit 206, a non-linear signal extractor unit 208, an individual drift class refinement unit 210, a collective drift refinement unit 212, and/or a performance analyzer 214.

The system 200 of the present disclosure may optimize energy performance evaluation of the system 100 as explained herein.

The energy consumption data unit 202 may collect the data at block 202, for example the data received from one or more of plurality of energy measuring means through the network 128. The energy measuring means may be for the entire site, for example a building or a floor in a building, or another metered region. It may also be dedicated to a specific type of usage, such as HVAC or lighting and the like, or it may be a mix of usages thereof. The data received from different sites may have different hierarchies of levels, for example as an asset, or a service, or a site, or an enterprise etc. evaluated based on their usage. The data received from different hierarchies of levels may provide additional information associated with energy consumption attributes that includes one or more of an outside air temperature, a cooling degree day (CDD), a heating degree day (HDD), a building management system (BMS), assets details, a site age, a climate zone, a site area, a site modification details etc. As an example, if data is available at a lowest level of hierarchy such as asset level, and if user is interested to evaluate the performance at a level higher than the asset level i.e. site level, the present invention handles it right from data preprocessing to performance analyzer stage.

Also, within an enterprise if data is available at different hierarchies, then the present invention instantiates an appropriate data preprocessing such as data availability/aggregation to achieve consistent energy performance evaluation across the enterprise. The system 200 inputs the energy consumption attributes into consideration for evaluating the energy consumption as important factors which influence the energy consumption data. Preferably, there may be a plurality of energy measuring means within a site, with each energy measuring means measuring energy consumption in a respective region of the site or measuring energy consumption for a respective type of usage. The data is transmitted via a wired or wireless connection over a network 128 communicably coupled to the controller 120. The data may be measured in any unit, for example kWh along with run hours with at least three cycles of frequency for example hours, days, months, years etc. At block 204, the data may be disaggregated into data corresponding to daily time intervals of use and energy consumption during this period of use and may be stored at the server 118 in the form of data sets. This provides energy usage information at discrete intervals throughout the day for that given day. The data is further pre-processed at block 204 to fill the missing gaps in the data sets in case data for a particular period is missing. Data aggregations are run on the basis of user needs.. The pre-processor block 204 may further analyse these attributes for their attribute importance, significance at individual or combinational level by capturing interactions between attributes on energy consumption data.

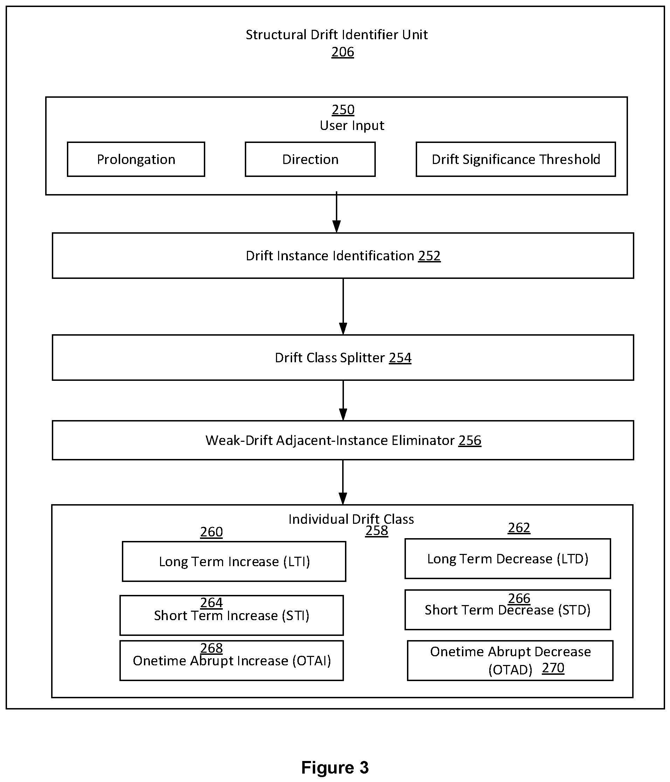

The block 206 is the structural drift identifier unit that may generate structural drifts to specify that there is significant change in the behavior of consumption over time. This is structural in nature because the drifts which are identified may be measured over time, capture intricate and may capture sudden change in the dynamics of the data. The structural drift identifier unit 206, based on the nature of change, classify the data into individual drift classes. The structural drift identifier unit 206 is described in detail in Fig. 3 below.

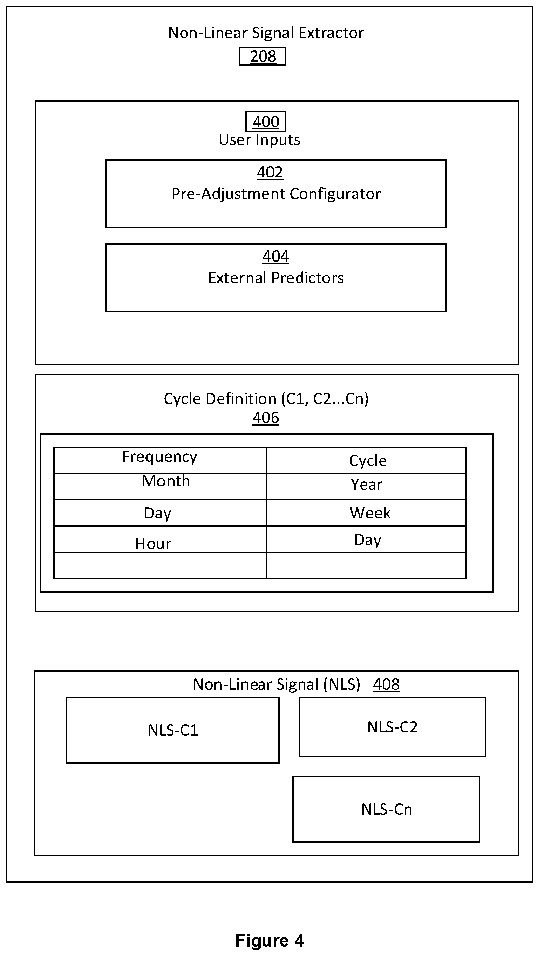

The non-linear signal extractor unit 208 may eliminate variability in the data to make the data consistent over time. The non-linear signal extractor unit 208 is described in detail in Fig. 4.

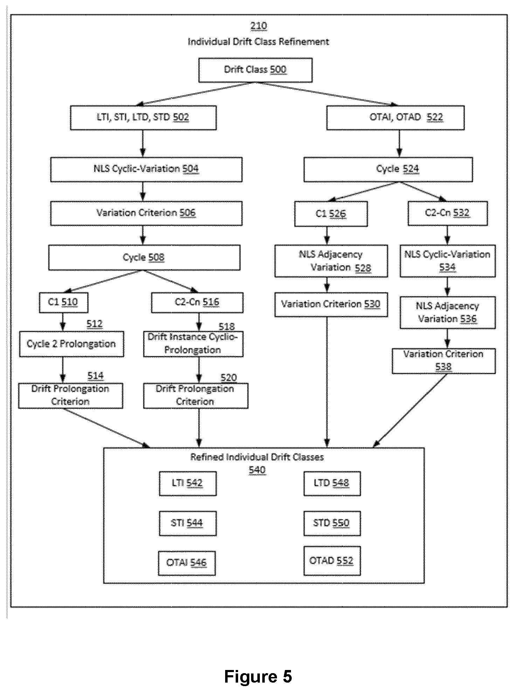

The individual drift refinement unit 210 receives the individual drift classes generated by the structural drift identifier unit 206 and the non-linear signals generated by the non-linear signal extractor unit 208 to refine the drift. The individual drift refinement unit 210 may generate refined individual drift classes for further processing. Further, the collective drift refinement unit 212 process the refined individual drift classes to eliminate second weak drifts to generate refined collective drift classes. The performance analyzer 214 may receive the refined collective drift classes to analyze the performance that may generate scorecard indicating the performance of units, entities based on drift/ operational insights, policy adherence and unit characteristics. The individual drift refinement unit 210 is described in detail in Fig. 5.

Figure 3 discloses a detailed diagram of the structural drift identifier unit 206. The structural drift identifier unit 206 further comprises a user input block 250, a drift instance identification block 252, a drift class splitter block 254, a weak-drift adjacent-instance eliminator block256, and an individual drift class block 258. The structural drift identifier unit 206 receives the data sets of energy consumption data preprocessed by the data pre-processing unit 204. Each data set comprises a plurality of data points stored at the server 118. The data points may be collected at regular time intervals, which may be set according to user preferences or system capabilities. The time intervals at which the data points are collected are sufficiently small to predict behavior of the energy consumption at the sites 110. In one embodiment, the data is collected at regular intervals while in some different embodiments, data points may be collected as real time continuous data.

In the structural drift identifier unit 206, a user may provide input at the user input block 250 to enable users to select set of parameters which guides the algorithm by relating to the technical problem which user intended to address. For example, prolongation, direction, and drift significant threshold. In case, the user selects the prolongation feature, the data is classified into classes based on the duration for which the structural drift impact may be observed. For example, the drift class may be identified based on prolongation feature for which the structural drift impact observed being long or short or onetime abrupt. This indicates that time period for which the drift impact is reflected in the data points of the data set. According to prolongation selected by the user, the present invention computes drift impact for time instance where drift is significant. For the same time instance drift impact may tend to change based on the prolongation type. In simpler terms, prolongation is a user input which guides the system by relating to the technical problem which user intended to address, for example, effectiveness of any asset enhancements/replacements or effectiveness of any policy change in the site. Drift impact is the statistics output which is obtained for the time instance where drift is significant through the statistical tests. As an example, if user selects prolongation option as long term, then all drifts pertaining to long term in the entirety of data may be identified along with their drift impact. In case, the user selects the direction feature, the data is classified into classes based on change in behavior of energy consumption which may be above or below the normalcy of a unit. The normalcy value may be pre-defined or provided through the user input. That is, the drift may vary below the normal predetermined or expected value or may be above the expected value. In case, the user selects the drift significance threshold feature, the data is classified into classes based on a drift significance threshold value for statistical testing of structural drifts. The structural drift may be defined as significant change in the behavior of energy consumption over time. Further, the drifts measured over time may capture the sudden change in the dynamics of the data may be considered as structural drifts.

At the drift instance identification block 252, a drift instance identification model may run to identify drift individually for each drift class on the basis of the user input 250. The structural drift identifier unit 206 is further configured to identify drift instance or the instance of occurrence of drift in data points for each individual drift class at the drift instance identification block 252 on the basis of the user input 250.

The drift Instance identification unit is configured to identify drift instance for each individual drift class using a consumption unit and a noise unit. The consumption unit is configured to extract noise from energy consumption data and compute revised consumption data by eliminating drift impact identified in the nth iteration performed by the noise unit from the energy consumption data and
iteratively repeat the operation of consumption unit until no further drifts are identified by noise unit. Further, the noise unit is configured to iteratively compute drift impact through statistical testing of the extracted noise at each time instance where test statistics is above the Drift Significance Threshold;
generate revised noise by eliminating the drift impact from the noise for time instances where noise is above the drift significance threshold;
collate data corresponding to drift instances and respective drift impact identified for each iteration performed by the noise unit; and
eliminate adjacent instances of long/short drift classes and duplicate drift instances of drift classes by giving preference to instances with higher drift impact.
structural drift identifier unit and Non-Linear Signal Extractor unit are run in parallel to decrease the overall algorithm execution time.

The system 200 may dynamically (such as daily or with every new data point, or any other relevant time of refresh) updates the model, detecting and adapting its reference to the new data received, and thus may be able to detect any new behavior. The model may constantly learn and adapt itself. The corrected data sets may become the new normal reference for any given day or time period.

In an exemplary embodiment, the model is described which is adaptive and used to model the variations in the energy consumption data to capture signals which are non-linear and devoid of seasonal variations the model can be any model used to predict variations in energy consumption data over a period of time.

At the drift class splitter block 254, the drift identification block output may be segregated class wise. At the weak-drift adjacent-instance eliminator block 256, consecutive drifts (for example-long and short) may be analyzed based on their drift impacts. Also, the drift instances with low drift impact may be eliminated. E.g. time instance X and X + 1 both are identified as Long-term Increase (LTI), then the method will give preference to the instance having higher drift impact and discard the remaining one. As an example, if a user is interested in identifying 4 structural drift classes, then algorithm will identify individually these 4 drift classes and at the end of n iterations of energy consumption data block of all the 4 drift classes, algorithm will store the drift instance identification output of all the 4 types of drift classes. Based on user inputs such as prolongation and direction, drift instance identification output is segregated class wise by the drift class splitter unit. The energy consumption data and drift instance identification output pertaining to each class will be separated out as 4 different datasets.

At the individual drift class block 258, the output received from the block 256 may be classified into individual drift classes based on the drift impacts at various drift instances. The individual drift classes may be at least one of a Long-Term Increase (LTI) 260, a Long-Term Decrease (LTD) 262, a Short-Term Increase (STI) 264, a Short-Term Decrease (STD) 266, a Onetime Abrupt Increase (OTAI) 268 and onetime abrupt decrease (OTAD) 270. The LTI class may be classified on the basis of the drift tending to move above the normalcy for a longer duration. The LTD class may be classified on the basis of the drift tending to move below the normalcy for a longer duration. The STI class may be classified on the basis of the drift tending to move above the normalcy for a shorter duration. The STD class may be classified on the basis of the drift tending to move below the normalcy for a shorter duration. The OTAI class may be classified on the basis of the drift tending to move above the normalcy for a single instance. The OTAD class may be classified on the basis of the drift tending to move below the normalcy for a single instance.

A person skilled in the art may appreciate that the present disclosure systematically and recursively identifies the changes in the behavior of consumption yielding incremental improvement in the drift detection.

Figure 4 discloses a detailed diagram of the non-linear signal extractor 208. The non-linear signal extractor 208 may further comprise a user input block 400, a cycle definition block 406 and a non-linear signal (NLS) block 408. The user input block 400 may further include a pre-adjustment configurator 402 and external predictors 404.

The non-linear signal extractor 208 is configured to receive multi-year energy consumption data that may tend to exhibit variations due to various factors. It is essential to capture and eliminate the variations to make multi-year consumption data consistent across years. The non-linear signal extractor may be configured to extract a set of non-linear signals that may be independent of other known factors. The users may have an option to select or provide the user inputs 400 based on various factors under pre-adjustment configurator 402 and external predictors 404 to enable the non-linear signal extractor to capture all the variations in the energy consumption. The non-linear signal extractor may further output nonlinear signals for each cycle, the cycles may be based on the frequency of the data. Further, the non-linear signal extractor 208 may be configured to identify and eliminate seasonal patterns in the data post suppressing or eliminating the effects of various pre-defined factors (for example holidays, trading days etc.) at the pre-adjustment configurator 402 and exogenous variables for example outside air temperature, CDD, and HDD etc. at the external predictors block 404.

In an embodiment, the non-linear signal extractor unit is further configured to model the variations in the energy consumption data to capture Non-Linear Signals devoid of seasonal variations based on the inputs provided under pre-adjustment configurator and external predictors of user input unit. The cycle definition block 406 of the non-linear signal extractor 208 may train the model on the data points collected in the form of frequency, cycle to generate cycles C1, C2....Cn. The cycle definition block 406 may capture monthly data corresponding to a cycle of a year. The cycle definition block 406 may capture data on per day basis corresponding to a cycle for a week. The cycle definition block 406 may also capture data on per hour basis corresponding to a cycle for a day.

The non-linear signal extractor 208 may extract noise from the energy consumption data at each time instance. The non-linear signal extractor 208 may further identify the effect of pre-defined factors, exogenous variables on the noise and remove them from the energy consumption data. The non-linear signal extractor 208 may further train the model to determine the variations in the data to capture signals which are non-linear and devoid of seasonal variations. The captured signals may be captured in the non-linear signal block 408 as NLS-C1, NLS-C2...NLS-Cn etc.

The person skilled in the art should appreciate that the present disclosure uncovers hidden details in the energy consumption by extracting non-linear signals in situations where data exhibit non-linearity in the trend which are very essential for robust energy performance evaluation.

Figure 5 discloses a detailed diagram of the individual drift class refinement unit 210. The individual drift class refinement unit 210 is configured to receive the individual drift class as identified in the structural drift class identifier unit 206 and the non-linear signals as input determined by the non-linear extractor unit discussed above to the individual drift class refinement unit 210. A drift class block 500 may bifurcate the LTI, the STI, the LTD and the STD classes to a first leg at block 502, and the OTAI and the OTAD class to the second leg 522.

Non-linear Signal (NLS) cyclic-variation may be performed on the first leg classes at block 504 to determine percentage Non linear Signal difference between previous cycle and current cycle. For example, the NLS cyclic variations determined for monthly data may be the percentage signal difference year over year of respective months. Similarly, in another example, the NLS cyclic variations determined for daily data may be the percentage signal difference week over week of the respective day.

At variation criterion block 506, the user may provide the input to define the variation criteria, for example - how much should NLS cyclic-variation increase or decrease in percentage. Further, at cycle block 508, prolongation may be determined by calculating number of instances for which NLS cyclic-variations satisfy the NLS variation criteria for one cycle. At block 510, a first cycle (C1) is initiated if the drift class falls on cycle1. A second cycle (C2) prolongation may be determined further at block 512 by calculating number of instances for which NLS cyclic-variation may satisfy the variation criteria. Further, a drift prolongation criterion, at block 514, may be determined separately for long term and short-term drifts. For long term drift, for respective C2 instances, it is checked if **Cycle2 Prolongation** satisfy the following Prolongation Criterion in % as illustrated as example below 1st Quarter : >70% (% Prolongation)
- Entire cycle 2: >45% (% Prolongation)

Based on the above criteria, identify the instance in C1 in which drift may be expected.
▪ Index = (Total Frequency of Cycle - Number of Instance satisfying NLS Variation in Cycle2)
▪ Drift Instance Expected= Navigate backwards by Index time instance from Cycle2
▪ Consider If, Drift Instance Expected = Drift Instance (by Structural Drift Identifier) +/-1, else ignore

Thus, the percentage impact due to drift is calculated by calculating average percentage non-linear signal variation in Cycle 2 (C2) instances satisfying the variation criteria.

For short term drift, for each drift instance identified in Cycle1 (C1), NLS variation may be calculated with respect to its 2nd Cycle. The NLS variation calculated may be for one quarter prior to the instance and one quarter post to the instance (including the drift instance) and the difference between them may be calculated. In case the difference is greater than NLS variation criterion, drift may be , else ignored. Further, the percentage impact due to drift may be calculated by calculating. % difference of NLS variation between one quarter prior to the instance, one quarter post to the instance (including the drift instance).

In another case, if the drift class falls in cycles C2-Cn at block 516, drift instance cyclic- prolongation may be determined further at block 518 by calculating number of instances for which NLS cyclic-variation may satisfy the variation criteria. Further, a drift prolongation criterion, at block 520, may be determined separately for long term and short-term drifts. For long term drift, if the drift is happening in last two quarters of last Cycle (Cycle n), it may be ignored. However, if the prolongation is greater than a predetermined value,
for example, if Prolongation > 75%,
it may be considered further.

Further, the percentage impact due to drift may be calculated by calculating the average % NLS Variation for one Cycle from that instance (instances satisfying Variation Criteria)

For short term drift, for each drift instance identified in cycles(C2-Cn), NLS variation with respect to its prior cycle may be calculated one quarter prior to the instance and one quarter post to the instance (including the drift instance) and the difference between them may be calculated. In case the difference is greater than NLS variation criterion, drift may be considered, else ignored. Further, the percentage impact due to drift may be calculated by calculating % difference of NLS variation between one quarter prior to the instance, one quarter post to the instance (including the drift instance).

In addition to above, the OTAI and the OTAD classes at block 522 may be refined by running cycles C1- Cn at block 524. Initially, a cycle C1 may be executed at block 526 if any drift falls on cycle C1. At an NLS adjacency-variation block 526, percentage signal difference between adjacent instances, i.e.- drift instance and average (2 non-drift instances prior to drift and post to drift) may be calculated. Based on user inputs, at a variation criterion block 530, user defined criterion may be set regarding how much percent NLS adjacency- variation should increase or decrease.

Further, for cycles C2 - Cn at block 524, NLS cyclic-variation may be determined by calculating percentage signal difference between previous cycle and current cycle at an NLS cyclic-variation block 534. At an NLS adjacency-variation block 536, percentage signal difference between adjacent instances, i.e.- non-drift instance prior to drift and post to drift may be evaluated. This may be calculated as either of the following:
Type 1: percentage difference between Adjacent instances of NLS Cyclic-Variation
Type2: percentage difference between Adjacent instances of NLS.

Further, at Variation Criterion block 538, a user defined variation criteria is provided regarding how much percentage of NLS Adjacency -Variation (Type1/2) may increase or decrease. If previous cycle instance is non-drift, NLS Adjacency Variation is calculated using Type 1 category, else if previous cycle instance is drift, NLS Adjacency Variation is calculated using Type2. Thus, percentage impact due to drift is calculated by calculating NLS Adjacency Variation (Type 1/2).

Therefore, the individual drift class refinement unit may be configured to eliminate weak drifts in the individual drift classes through the set of non-linear signals by computing non-linear signal (NLS) cyclic variation, non-linear adjacency variation, prolongation, validity of drift instance and percentage impact due to drift.

At refined drift individual classes, block 540 individual drift classes may be stored refined at the blocks 514, 520, 530 and 538. These individual drift classes may be stored individually at blocks LTI 542, STI 544, OTAI 546, LTD 548, STD 550 and OTAD 552 after refinement.

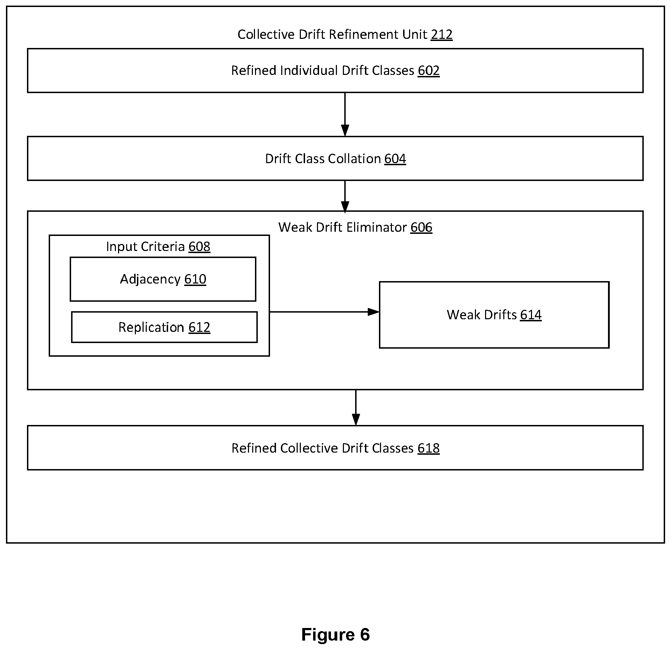

Figure 6 discloses a detailed diagram of the collective drift refinement unit 212. The Individual Drift Class Refinement block 210 may undergo further refinement by eliminating weak drifts through adjacency and replication criteria. The refined drift individual classes may be received as input from block 210 at block 602 in the collective drift refinement unit 212. Drift Class Collation block 604 may collate individual drift instances of all the classes along with their NLS cyclic-variation, NLS adjacency-variation, and prolongation outputs. A Weak Drift Eliminator block 606 further comprises an Input Criteria Block 608 and a Weak Drifts block 614. The Input Criteria Block 608 may get the collated drift instances that may undergo the criteria of adjacency and replication. The Input Criteria Block 608 further comprises an Adjacency block 610 and a Replication block 612. In Adjacency block 610 adjacent instances of drift classes may be eliminated by giving preference of the order: Long Term >Short Term >One Time Abrupt. In case one-time abrupt increase and one-time abrupt decrease appear adjacent to each other, Adjacency Test may be void. In Replication block 612 duplicate instances of drift classes that may be eliminated by giving preference of the order: Long Term >Short Term >One Time Abrupt. At the Weak Drifts block 614, the weak drifts are eliminated to generate refined collective drift classes. The Refined Collective Drift Classes block 618 obtained from refined individual drift classes block 606 is further used for identifying various insights in the performance analyzer unit..

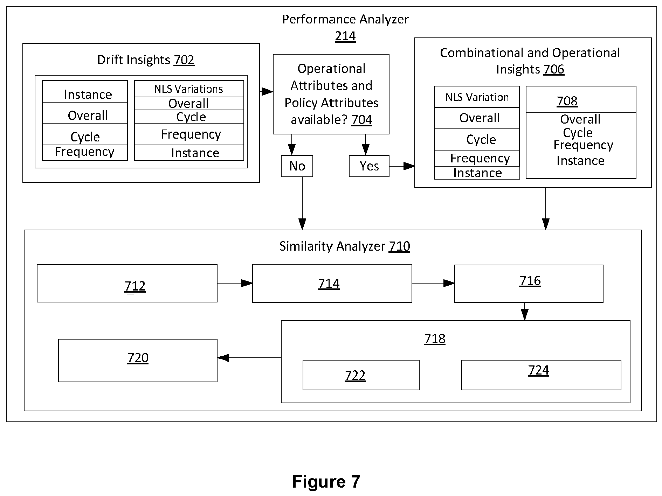

Figure 7 discloses a detailed diagram of the performance analyzer unit 214. The performance analyzer block 214 comprises a Drift Insights block 702, a Combinational and Operational Insights block 706, a Similarity Analyzer block 710. The Drift Insights block 702 discloses drift insight that may quantify change in the behavior of consumption at Overall, Cycle, Frequency wise in terms of instance (occurrences of drifts) and NLS variation (percentage impact due to drift). The Drift Insights block 702 also discloses drift insight at different hierarchies of levels including one or more of asset, service, site, enterprise.. For example, The Drift Insights block 702 discloses the following insights at each hierarchies of level. Overall: Insights at Unit Level (E.g. Asset/Site Etc.)
- Cycle: Insights at Cycle Level (E.g. Cycle 1, 2...n)
- Frequency: Insights at Frequency Level (E.g. Behavior of drifts at every Jan month of all cycles, Feb month of all cycles etc.)

The performance analyzer verify if the operational attributes and policy attributes are available. In case available, a Combinational and Operational Insights block 706 is analyzed in which the combinational may refer to the drift insights derived over various combinations of operational attributes. In case of unavailability of a similarity analyzer block 710 is analyzed, the Combinational and Operational Insights block 706 may quantify change in behavior of consumption at overall, cycle, frequency wise in terms of NLS variation (percentage drift impact due to drift) and Policy adherence and improvements using the Operational and Policy Information of the Unit. The Combinational and Operational Insights block 706 also discloses insight at different hierarchies of levels including one or more of asset, service, site, enterprise.

The similarity analyzer block 710 is configured to analyze the changes in the behavior of consumption of homogenous units at overall, cycle, frequency wise in terms of:
- Instance (Occurrences of Drifts)
- NLS Variation (percentage impact due to drift)

The similarity analyzer block 710 further comprises Inputs block 712, a Homogenous-Entity Formation block 714, a Homogenous-Entity Interpretation block 716, an Operational Inefficiencies within / across Homogenous-Entity block 718 and a Performance Leaderboard block 720. The Homogenous-Entity Formation block 714 discloses homogenous entities that may be formed with various inputs such as, but not limited to:
- Attributes (Unit, Operational, and Policy)
- Drift (Instances, NLS Variations, Prolongations, % Impact due to drift)

The Homogenous-Entity Interpretation block 716 may define the characteristics of each homogenous-entity. Between different entities the Homogenous-Entity Interpretation block is configured to identify the key attribute/s and its significance towards drift Impact.

The Operational Inefficiencies within / across Homogenous-Entity block 718 is configured to measure the effectiveness of operational and policy changes that the entities may have undergone in comparison within/across entities in terms of:
- Instance (Occurrences of Drifts)
- NLS Variation (% impact due to Drift)

The Performance Leaderboard 720 may disclose a scorecard indicating the performance of units, entities based on drift/operational insights, policy adherence, and unit/entity characteristics etc.

The person skilled in the art may appreciate that the homogenous entity formation feature may enable benchmarking opportunities within/across entities and evaluate key performance parameters contributing to the performance degradation.

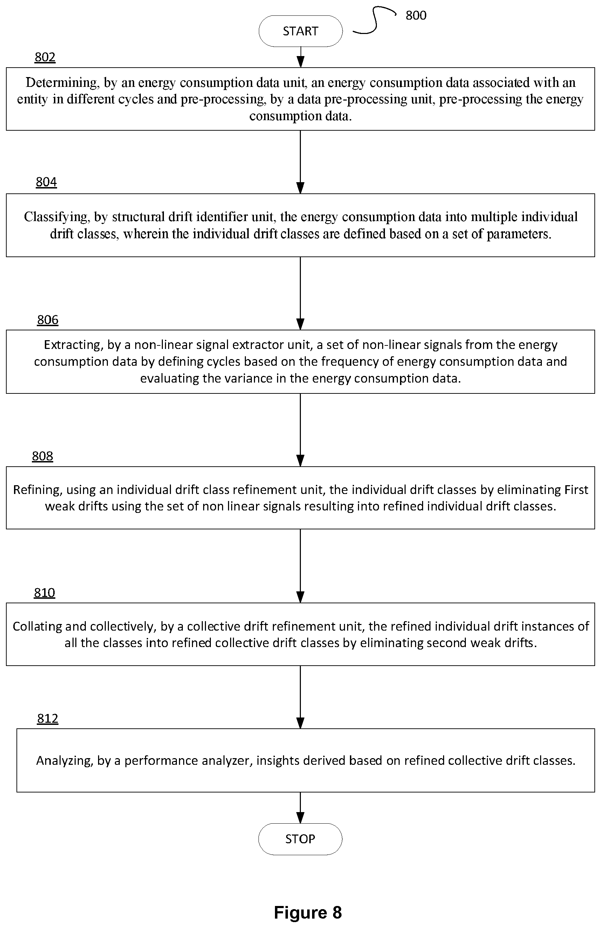

Figure 8 discloses a flowchart outlining the features of the invention in an exemplary embodiment of the invention. The method flowchart 800 describes a method optimizing energy performance evaluation. The method flowchart 800 discloses the following steps:
At step 802, the energy consumption data unit 202 may associate with an entity in different cycles and the data pre-processing unit 204 may pre-process the energy consumption data. This has been explained in detail in Figure 2 above.
At step 804, a structural drift identifier unit 206 may classify the energy consumption data into multiple individual drift classes. Also, the individual drift classes may be defined on the basis of a set of parameters. This has been explained in detail in Figure 3 above.
At step 806, a non-linear signal extractor unit 208 may extract a set of non-linear signals from the energy consumption data by identifying cycles based on the frequency of energy consumption data and evaluating the variance in the energy consumption data. This has been explained in detail in Figure 4 above.
At step 808, the individual drift class refinement unit 210 may refine the individual drift classes by eliminating first weak drifts using the set of non-linear signals resulting into refined individual drift classes. This has been explained in detail in Figure 5 above.
At step 810, the collective drift refinement unit 212 may collate and collectively refine the refined individual drift instances of all the classes into refined collective drift classes by eliminating second weak drifts. This has been explained in detail in Figure 6 above.
At step 812, the performance analyzer unit 214 may analyze insights derived based on refined collective drift classes. This has been explained in detail in Figure 7 above.

The present invention is applicable in any industry/field that is well known in the art and where an equipment is utilized. The embodiments of the invention discussed herein are exemplary and various modification and alterations to a person skilled in the art are within the scope of the invention.

In one embodiment of the invention, the invention can be operated using the one or more computer readable devices. The one or more computer readable devices can be associated with a system 100. A computer readable medium comprises one or more processors and a memory coupled to the one or more processors, the memory stores instructions executed by the one or more processors. The one or more processors are configured to determine an energy consumption data associated with an entity 110 in different cycles and pre-process the energy consumption data. Further, the processor may classify the energy consumption data into multiple individual drift classes 260...262, wherein individual drift classes are defined on basis of a set of parameters at the structural drift identifier unit 206. The one or more processors are further configured to extract a set of non-linear signals from the energy consumption data by defining cycles based on the frequency of energy consumption data and evaluating the variance in energy consumption data at the non-linear signal extractor unit 208. The one or more processors are also configured to refine the individual drift classes by eliminating first weak drifts using the set of non-linear signals resulting into refined individual drift classes at the individual drift class refinement unit 210. The one or more processors are configured to collate and collectively refine the refined individual drift instances of all the classes into refined collective drift classes by eliminating second weak drifts at the collective drift refinement unit 212. The one or more processors are further configured to analyze insights derived based on refined collective drift classes at the performance analyzer 214.

Exemplary computer readable media includes flash memory drives, digital versatile discs (DVDs), compact discs (CDs), floppy disks, and tape cassettes. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. Computer storage media are tangible and mutually exclusive to communication media. Computer storage media are implemented in hardware and exclude carrier waves and propagated signals. Computer storage media for purposes of this invention are not signals *per se.* Exemplary computer storage media include hard disks, flash drives, and other solid-state memory. In contrast, communication media typically embody computer readable instructions, data structures, program modules, or other data in a modulated data signal such as a carrier wave or other transport mechanism and include any information delivery media.

Although described in connection with an exemplary computing system environment, examples of the invention are capable of implementation with numerous other general purposes or special purpose computing system environments, configurations, or devices.

Examples of the invention may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the invention may be implemented with any number and organization of such components or modules. For example, aspects of the invention are not limited to the specific computer-executable instructions or the specific components or modules illustrated in the Figures/Tables and described herein. Other examples of the invention may include different computer-executable instructions or components having more or less functionality than illustrated and described herein. Aspects of the invention transform a general-purpose computer into a special-purpose computing device when configured to execute the instructions described herein.

The order of execution or performance of the operations in examples of the invention illustrated and described herein is not essential, unless otherwise specified. That is, the operations may be performed in any order, unless otherwise specified, and examples of the invention may include additional or fewer operations than those disclosed herein. For example, it is contemplated that executing or performing a particular operation before, contemporaneously with, or after another operation is within the scope of aspects of the invention.

As it employed in the subject specification, the term "processor" can refer to substantially any computing processing unit or device comprising, but not limited to comprising, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Processors can exploit nano-scale architectures such as, but not limited to, molecular and quantum-dot based transistors, switches and gates, in order to optimize space usage or enhance performance of user equipment. A processor may also be implemented as a combination of computing processing units.

In the subject specification, terms such as "data store," "data storage," "database," "cache," and substantially any other information storage component relevant to operation and functionality of a component, refer to "memory components," or entities embodied in a "memory" or components comprising the memory. It will be appreciated that the memory components, or computer-readable storage media, described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Additionally, the disclosed memory components of systems or methods herein are intended to comprise, without being limited to comprising, these and any other suitable types of memory.

When introducing elements of aspects of the invention or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one ofB and/or at least one of C".

Having described aspects of the invention in detail, it will be apparent that modifications and variations are possible without departing from the scope of aspects of the invention as defined in the appended claims. As various changes could be made in the above constructions, products, and methods without departing from the scope of aspects of the invention, it is intended that all matter contained in the above description and shown in the accompanying drawings shall be interpreted as illustrative and not in a limiting sense.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

The following clauses recite features of the invention that may or may not presently be claimed, and which may serve as basis for amendment(s) and/or one or more divisional applications.
1. A system for optimizing energy performance evaluation, the system comprising:
   an energy consumption data unit configured to determine an energy consumption data associated with an entity in different cycles;
   a structural drift identifier unit configured to classify the energy consumption data into multiple individual drift classes, wherein individual drift classes are defined on the basis of a set of parameters;
   a non-linear signal extractor unit configured to extract a set of non-linear signals from the energy consumption data by defining cycles based on the frequency of energy consumption data and evaluating the variance in energy consumption data;
   an individual drift class refinement unit configured to refine individual drift classes by eliminating first weak drifts using the set of non-linear signals resulting into refined individual drift classes;
   a collective drift refinement unit configured to collate and collectively refine individual drift instances of all the refined individual drift classes into refined collective drift classes by eliminating second weak drifts; and
   a performance analyzer configured to analyze insights derived based on refined collective drift classes.
2. The system of clause 1, wherein the cycles of the energy consumption data are based on one or more of months, days, hours.
3. The system of clause 1, wherein the energy consumption data is captured at different hierarchies of levels including one or more of asset, service, site, enterprise.
4. The system of clause 3, wherein the different hierarchies of levels are associated with energy consumption attributes that includes one or more of outside air temperature, cooling degree day (CDD), heating degree day (HDD), building management system (BMS), assets details, site age, climate zone, site area, site modification details.
5. The system of clause 1, wherein the set of parameters are user defined inputs including prolongation, direction and drift significance threshold.
6. The system of clause 1, further comprising a data pre-processing unit configured to pre-process the energy consumption data, wherein the data pre-processing unit is configured to identify missing data by pre-processing the energy consumption data, wherein the data pre-processing unit is also configured to run data aggregations based on user needs and analyse the attributes for their attribute importance, significance at individual or combinational level by capturing interactions between attributes on energy consumption data.
7. The system of clause 1, wherein the structural drift identifier unit further comprises drift instance identification unit configured to identify drift instances for each individual drift class using the energy consumption data unit and a noise unit.
8. The system of clause 7, wherein the energy consumption data unit is further configured to:
   extract noise from the energy consumption data;
   compute revised energy consumption data by eliminating drift impact identified in iterations performed by the noise unit from the energy consumption data; and
   iteratively repeat the operation of the energy consumption data unit until no further drifts are identified by the noise unit.
9. The system of clause 7, wherein the noise unit is configured to:
   iteratively compute drift impact through statistical testing of the extracted noise at each time instance where test statistics is above a drift significance threshold;
   generate revised noise by eliminating the drift impact from the noise for time instances where noise is above the drift significance threshold;
   collate data corresponding to drift instances and respective drift impact identified for each iteration performed by the noise unit; and
   eliminate adjacent instances of long/short drift classes and duplicate drift instances of drift classes by giving preference to instances with higher drift impact.
10. The system of clause 1, wherein the structural drift identifier unit further comprises a drift class splitter configured to segregate the energy consumption data into the individual drift classes, wherein the individual drift class is one or more of long term increase (LTI), long term decrease (LTD), short term increase (STI), short term decrease (STD), onetime abrupt increase (OTAI), onetime abrupt decrease (OTAD).
11. The system of clause 10, wherein the structural drift identifier unit further comprises a weak drift adjacent instance eliminator configured to identify and eliminate the adjacent drift instances having low impact drifts from each individual drift class based on the respective drift impact.
12. The system of clause 1, wherein the non-linear signal extractor unit is further configured to model the variations in the energy consumption data to capture non-linear signals devoid of seasonal variations based on the inputs provided under pre-adjustment configurator and an external predictor block to enable the non-linear signal extractor to capture all the variations in the energy consumption data.
13. The system of clause 1, wherein the individual drift class refinement unit is configured to eliminate first weak drifts in the individual drift classes through the set of non-linear signals by computing non-linear signal (NLS) cyclic variation, non-linear signal (NLS) adjacency variation, prolongation, validity of drift instance and percentage impact due to drift.
14. The system of clause 13, wherein the individual drift class refinement unit is further configured to:
   determine the NLS cyclic-variation by calculating a percentage signal difference between a previous cycle and a current cycle; and
   checking by using a variation criteria unit if the NLS cyclic variation satisfies a predefined user criterion.
15. The system of clause 13, wherein the individual drift class refinement unit is further configured to determine the NLS adjacency variation by calculating a percentage signal difference between adjacent instances; and checking by using a variation criteria unit if the NLS adjacency variation satisfies a predefined user criterion.
16. The system of clause 13, wherein the individual drift class refinement unit is further configured to:
   determine prolongation by calculating number of instances for which NLS cyclic-variations satisfy the NLS variation criteria for one cycle; and
   check by using a drift prolongation criteria unit if the prolongation satisfies a predefined user criterion.
17. The system of clause 13, wherein the percentage impact due to drift is calculated differently based on the drift classes and the cycle in which drift is identified.
18. The system of clause 1, wherein the collective drift refinement unit further comprises a weak drift eliminator unit configured to receive collated drift instances and to eliminate second weak drifts based on adjacency and replication criteria to generate refined collective drift classes.
19. The system of clause 1, wherein the performance analyzer further comprises a drift insights unit configured to analyze drift instances and NLS variation at various levels of hierarchies.
20. The system of clause 1, wherein the performance analyzer further comprises a combinational and operational insights unit configured to measure effectiveness of operational and policy changes based on available operational and policy information.
21. The system of clause 1, wherein the performance analyzer further comprises a homogenous entity formation unit configured to disclose homogenous entities formed using available inputs including one or more of unit attributes, operational attributes, policy attributes, drift instances, NLS variations, prolongations and percentage impact due to drift.
22. The system of clause 1, wherein the performance analyzer further comprises a homogenous entity interpretation unit configured to define one or more characteristics of each homogenous entity and to identify key attributes causing drift.
23. The system of clause 1, wherein the performance analyzer is further configured to measure the effectiveness of operational and policy changes that the entities have undergone in comparison within or across the entities and to display a scorecard indicating the performance of each entity.
24. A method for optimizing energy performance evaluation, the method comprising:
   determining, using an energy consumption data unit, an energy consumption data associated with an entity in different cycles;
   classifying, using a structural drift identifier unit, the energy consumption data into multiple individual drift classes, wherein the individual drift classes are defined on the basis of a set of parameters;
   extracting, using a non-linear signal extractor unit, a set of non-linear signals from the energy consumption data by identifying cycles based on the frequency of energy consumption data and evaluating the variance in the energy consumption data;
   refining, using an individual drift class refinement unit, the individual drift classes by eliminating first weak drifts using set of non-linear signals resulting into refined individual drift classes;
   collating and collectively, using a collective drift refinement unit, the refined individual drift instances of all the refined individual drift classes into refined collective drift classes by eliminating second weak drifts; and
   analyzing, using a performance analyzer, insights derived based on refined collective drift classes.
25. The method of clause 24, wherein the set of parameters are user defined inputs including prolongation, direction and drift significance threshold.
26. The method of clause 24, wherein the structural drift identifier unit further comprises drift instance identification unit configured to identify drift instances for each individual drift class using the energy consumption data unit and a noise unit.
27. The method of clause 26, further comprising:
   extracting noise from the energy consumption data;
   computing revised energy consumption data by eliminating drift impact identified in an iteration performed by the noise unit from the energy consumption data; and
   iteratively repeating the operation of the energy consumption data unit until no further drifts are identified by the noise unit.
28. The method of clause 27, further comprising:
   iteratively computing drift impact through statistical testing of the extracted noise at each time instance where test statistics is above a drift significance threshold;
   generating revised noise by eliminating the drift impact from the noise for time instances where noise is above the drift significance threshold;
   collating data corresponding to drift instances and respective drift impact identified for each iteration performed by the noise unit; and
   eliminating adjacent instances of long/short drift classes and duplicate drift instances of drift classes by giving preference to instances with higher drift impact.
29. The method of clause 24, wherein the structural drift identifier unit further comprises segregating the energy consumption data into the individual drift classes using a drift class splitter, wherein the individual drift class is one or more of long term increase (LTI), long term decrease (LTD), short term increase (STI), short term decrease (STD), onetime abrupt increase (OTAI), onetime abrupt decrease (OTAD).
30. The method of clause 24, wherein the structural drift identifier unit further comprises identifying and eliminating, using a weak drift adjacent instance eliminator, the adjacent drift instances having low impact drifts from each class based on the respective drift impact.
31. The method of clause 24, wherein the non-linear signal extractor unit further comprises:
   training to model the variations in the energy consumption data to capture signals which are non-Linear and devoid of seasonal variations
32. A computer readable medium comprising one or more processors and a memory coupled to the one or more processors, the memory storing instructions executed by the one or more processors, the one or more processors configured to:
   determine an energy consumption data associated with an entity in different cycles and pre-process the energy consumption data;
   classify the energy consumption data into multiple individual drift classes, wherein individual drift classes are defined on basis of a set of parameters;
   extract a set of non-linear signals from the energy consumption data by identifying cycles based on the frequency of energy consumption data and evaluating the variance in energy consumption data;
   refine the individual drift classes by eliminating first weak drifts using the set of non-linear signals resulting into refined individual drift classes;
   collate and collectively refine the refined individual drift instances of all the classes into refined collective drift classes by eliminating second weak drifts; and
   analyze insights derived based on refined collective drift classes.

## Claims

1. A system for optimizing energy performance evaluation, the system comprising:
an energy consumption data unit configured to determine an energy consumption data associated with an entity in different cycles;
a structural drift identifier unit configured to classify the energy consumption data into multiple individual drift classes, wherein individual drift classes are defined on the basis of a set of parameters;
a non-linear signal extractor unit configured to extract a set of non-linear signals from the energy consumption data by defining cycles based on the frequency of energy consumption data and evaluating the variance in energy consumption data;
an individual drift class refinement unit configured to refine individual drift classes by eliminating first weak drifts using the set of non-linear signals resulting into refined individual drift classes;
a collective drift refinement unit configured to collate and collectively refine individual drift instances of all the refined individual drift classes into refined collective drift classes by eliminating second weak drifts; and
a performance analyzer configured to analyze insights derived based on refined collective drift classes.

2. The system of claim 1, wherein the cycles of the energy consumption data are based on one or more of months, days, hours.

3. The system of claim 1 or 2, wherein the energy consumption data is captured at different hierarchies of levels including one or more of asset, service, site, enterprise; and optionally
wherein the different hierarchies of levels are associated with energy consumption attributes that includes one or more of outside air temperature, cooling degree day (CDD), heating degree day (HDD), building management system (BMS), assets details, site age, climate zone, site area, site modification details.

4. The system of any preceding claim, wherein the set of parameters are user defined inputs including prolongation, direction and drift significance threshold.

5. The system of any preceding claim, further comprising a data pre-processing unit configured to pre-process the energy consumption data, wherein the data pre-processing unit is configured to identify missing data by pre-processing the energy consumption data, wherein the data pre-processing unit is also configured to run data aggregations based on user needs and analyse the attributes for their attribute importance, significance at individual or combinational level by capturing interactions between attributes on energy consumption data.

6. The system of any preceding claim, wherein the structural drift identifier unit further comprises drift instance identification unit configured to identify drift instances for each individual drift class using the energy consumption data unit and a noise unit; and optionally
wherein the energy consumption data unit is further configured to:
extract noise from the energy consumption data;
compute revised energy consumption data by eliminating drift impact identified in iterations performed by the noise unit from the energy consumption data; and
iteratively repeat the operation of the energy consumption data unit until no further drifts are identified by the noise unit; and/or
wherein the noise unit is configured to:
iteratively compute drift impact through statistical testing of the extracted noise at each time instance where test statistics is above a drift significance threshold;
generate revised noise by eliminating the drift impact from the noise for time instances where noise is above the drift significance threshold;
collate data corresponding to drift instances and respective drift impact identified for each iteration performed by the noise unit; and
eliminate adjacent instances of long/short drift classes and duplicate drift instances of drift classes by giving preference to instances with higher drift impact.

7. The system of any preceding claim, wherein the structural drift identifier unit further comprises a drift class splitter configured to segregate the energy consumption data into the individual drift classes, wherein the individual drift class is one or more of long term increase (LTI), long term decrease (LTD), short term increase (STI), short term decrease (STD), onetime abrupt increase (OTAI), onetime abrupt decrease (OTAD); and optionally
wherein the structural drift identifier unit further comprises a weak drift adjacent instance eliminator configured to identify and eliminate the adjacent drift instances having low impact drifts from each individual drift class based on the respective drift impact.

8. The system of any preceding claim, wherein the non-linear signal extractor unit is further configured to model the variations in the energy consumption data to capture non-linear signals devoid of seasonal variations based on the inputs provided under pre-adjustment configurator and an external predictor block to enable the non-linear signal extractor to capture all the variations in the energy consumption data.

9. The system of any preceding claim, wherein the individual drift class refinement unit is configured to eliminate first weak drifts in the individual drift classes through the set of non-linear signals by computing non-linear signal (NLS) cyclic variation, non-linear signal (NLS) adjacency variation, prolongation, validity of drift instance and percentage impact due to drift; and optionally
wherein the individual drift class refinement unit is further configured to:
determine the NLS cyclic-variation by calculating a percentage signal difference between a previous cycle and a current cycle; and
checking by using a variation criteria unit if the NLS cyclic variation satisfies a predefined user criterion.

10. The system of claim 9, wherein the individual drift class refinement unit is further configured to determine the NLS adjacency variation by calculating a percentage signal difference between adjacent instances; and checking by using a variation criteria unit if the NLS adjacency variation satisfies a predefined user criterion; and/or
wherein the individual drift class refinement unit is further configured to:
determine prolongation by calculating number of instances for which NLS cyclic-variations satisfy the NLS variation criteria for one cycle; and
check by using a drift prolongation criteria unit if the prolongation satisfies a predefined user criterion; and/or
wherein the percentage impact due to drift is calculated differently based on the drift classes and the cycle in which drift is identified.

11. The system of any preceding claim, wherein the collective drift refinement unit further comprises a weak drift eliminator unit configured to receive collated drift instances and to eliminate second weak drifts based on adjacency and replication criteria to generate refined collective drift classes.

12. The system of any preceding claim, wherein the performance analyzer further comprises a drift insights unit configured to analyze drift instances and NLS variation at various levels of hierarchies; and/or
wherein the performance analyzer further comprises a combinational and operational insights unit configured to measure effectiveness of operational and policy changes based on available operational and policy information; and/or
wherein the performance analyzer further comprises a homogenous entity formation unit configured to disclose homogenous entities formed using available inputs including one or more of unit attributes, operational attributes, policy attributes, drift instances, NLS variations, prolongations and percentage impact due to drift.

13. The system of any preceding claim, wherein the performance analyzer further comprises a homogenous entity interpretation unit configured to define one or more characteristics of each homogenous entity and to identify key attributes causing drift; and/or
wherein the performance analyzer is further configured to measure the effectiveness of operational and policy changes that the entities have undergone in comparison within or across the entities and to display a scorecard indicating the performance of each entity.

14. A method for optimizing energy performance evaluation, the method comprising:
determining, using an energy consumption data unit, an energy consumption data associated with an entity in different cycles;
classifying, using a structural drift identifier unit, the energy consumption data into multiple individual drift classes, wherein the individual drift classes are defined on the basis of a set of parameters;
extracting, using a non-linear signal extractor unit, a set of non-linear signals from the energy consumption data by identifying cycles based on the frequency of energy consumption data and evaluating the variance in the energy consumption data;
refining, using an individual drift class refinement unit, the individual drift classes by eliminating first weak drifts using set of non-linear signals resulting into refined individual drift classes;
collating and collectively, using a collective drift refinement unit, the refined individual drift instances of all the refined individual drift classes into refined collective drift classes by eliminating second weak drifts; and
analyzing, using a performance analyzer, insights derived based on refined collective drift classes.

15. A computer readable medium comprising one or more processors and a memory coupled to the one or more processors, the memory storing instructions executed by the one or more processors, the one or more processors configured to:
determine an energy consumption data associated with an entity in different cycles and pre-process the energy consumption data;
classify the energy consumption data into multiple individual drift classes, wherein individual drift classes are defined on basis of a set of parameters;
extract a set of non-linear signals from the energy consumption data by identifying cycles based on the frequency of energy consumption data and evaluating the variance in energy consumption data;
refine the individual drift classes by eliminating first weak drifts using the set of non-linear signals resulting into refined individual drift classes;
collate and collectively refine the refined individual drift instances of all the classes into refined collective drift classes by eliminating second weak drifts; and
analyze insights derived based on refined collective drift classes.
